# EUROPÄISCHE PATENTSCHRIFT

(11) **EP 2 504 577 B1**
(45) Veröffentlichungstag und Bekanntmachung des Hinweises auf die Patenterteilung: **20.11.2013**
(21) Anmeldenummer: 10759649.6
(22) Anmeldetag: 29.09.2010
(51) Int. Cl.: F04B 1/04, F04B 53/14, F04B 53/16, B60T 8/40, F16J 15/16, F16J 15/32, F16J 15/56

(54) **KOLBENPUMPE**
PISTON PUMP
POMPE À PISTON

(30) Priorität: 27.11.2009 DE 102009047217
(43) Veröffentlichungstag der Anmeldung: 03.10.2012
(73) Patentinhaber: Robert Bosch GmbH, 70442 Stuttgart (DE)
(72) Erfinder: SCHEPP, Rene, 71336 Waiblingen (DE); SCHMOLL, Klaus-Peter, 74251 Lehrensteinsfeld (DE); ALAZE, Norbert, 71706 Markgroeningen (DE); HERMANN, Harald, 71292 Friolzheim (DE)
(86) Internationale Anmeldenummer: PCT/EP2010/064438
(87) Internationale Veröffentlichungsnummer: WO 2011/064019

(56) Entgegenhaltungen:
- EP-A1- 1 068 449
- WO-A1-2006/067076
- WO-A1-2008/015071
- DE-A1- 10 106 641
- DE-B3-102005 034 437

## Beschreibung

### Stand der Technik

Die Erfindung betrifft eine Kolbenpumpe für eine hydraulische, eine Schlupfregelung aufweisende Fahrzeugbremsanlage mit den Merkmalen des Oberbegriffs des Anspruchs 1. Schlupfregelungen für Fahrzeugbremsanlagen sind bekannt, sie erfolgen üblicherweise als (Brems-) Blockierschutz-, Antriebsschlupf-und/oder Fahrdynamik- bzw. Schleuderschutzregelungen. Gebräuchliche Abkürzungen sind ABS, ASR, FDR und ESP. Die Kolbenpumpen werden zum Aufbau eines hydraulischen Drucks zur Schlupfregelung verwendet und vielfach als Rückförderpumpen bezeichnet. Die Kolbenpumpe kann auch zum Aufbau eines hydraulischen Drucks in einer hydraulischen Fremdenergie-Fahrzeugbremsanlage dienen.

Kolbenpumpen für schlupfgeregelte Fahrzeugbremsanlagen sind bekannt. Sie weisen einen Zylinder und einen Kolben auf, der in den Zylinder axial verschiebbar und zu einer im Zylinder axial hin- und hergehenden Hubbewegung antreibbar ist. Der oder die Zylinder von Kolbenpumpen für Schlupfregelungen von Fahrzeugbremsanlagen sind vielfach als zylindrische Bohrungen in einem sog. Hydraulikblock ausgebildet, der außer der Kolbenpumpe weitere hydraulische Bauelemente für die Schlupfregelung wie Magnetventile, Hydrospeicher, Rückschlagventile enthält und sie hydraulisch miteinander verschaltet. Der Hubantrieb des Kolbens solcher Kolbenpumpen erfolgt vielfach mit einem Exzenter, der mit einem Elektromotor drehend antreibbar ist und an dessen Umfang der Kolben mit einer Stirnfläche anliegt. Eine Kolbenrückstellfeder, die auf einer dem Exzenter abgewandten Stirnseite des Kolbens angeordnet ist, hält den Kolben mit seiner dem Exzenter zugewandten Stirnfläche in Anlage an einem Umfang des Exzenters.

Die Kolben bekannter Kolbenpumpen sind mit einem Dichtring im Zylinder abgedichtet, der auf einer einem Pumpenraum abgewandten Seite axial von einem Stützring abgestützt wird. Der Pumpenraum ist ein Raum im Zylinder, dessen Volumen bei der hin- und hergehenden Hubbewegung des Kolbens abwechselnd vergrößert und verkleinert wird um Bremsflüssigkeit abwechselnd anzusaugen und zu verdrängen, d.h. um Bremsflüssigkeit zu fördern. Der Pumpenraum befindet sich auf der dem Exzenter abgewandten Stirnseite des Kolbens. Der Dichtring besteht üblicherweise aus einem gummielastischen Material, der Stützring aus einem steifen Kunststoff, er soll sich bei einer Druckbeaufschlagung nicht oder allenfalls gering verformen. Die Funktion des Stützrings ist eine axiale und vorzugsweise möglichst großflächige Abstützung des Dichtrings um eine Spaltextrusion des Dichtrings bei einer Druckbeaufschlagung zu vermeiden. In Kolbenpumpen zur Schlupfregelung hydraulischer Fahrzeugbremsanlagen können Drücke von beispielsweise bis zu 280 bar auftreten und auf den Dichtring wirken. Spaltextrusion bedeutet eine fließende, also plastische Verformung des Dichtrings in einen Spalt zwischen dem Kolben und dem Zylinder. Die Druckbeaufschlagung des Dichtrings erfolgt auf der dem Pumpenraum zugewandten Seite, abgestützt wird der Dichtring vom Stützring auf der gegenüberliegenden, d.h. dem Pumpenraum abgewandten Seite.

Die internationale Patentanmeldung WO 2008/015 071 A1 offenbart eine Dicht- und Führungsanordnung für einen Kolben einer Kolbenpumpe einer hydraulischen Fahrzeugbremsanlage. Die Dicht- und Führungseinrichtung weist einen Dichtring, einen Führungsring und einen dazwischen angeordneten Stützring auf. Ein Außendurchmesser des Stützrings ist kleiner als ein Innendurchmesser einer Zylinderbohrung, so dass ein Ringspalt zwischen dem Stützring und der Zylinderbohrung besteht, durch die Fluid durchtreten kann.

Auch die Offenlegungsschrift DE 101 06 641 A1 offenbart eine Kolbenpumpe für eine schlupfgeregelte, hydraulische Fahrzeugbremsanlage, deren Kolben mit einem Dichtring in einem Zylinder abgedichtet ist und mit einem Stützring, der den Dichtring auf einer Seite axial stützt und dessen Außendurchmesser kleiner als der Durchmesser der Zylinderbohrung ist.

### Offenbarung der Erfindung

Erfindungsgemäß weist der Stützring mindestens einen Längsdurchlass für Fluid, also für Bremsflüssigkeit, auf. Durch den Längsdurchlass kommuniziert die dem Dichtring zugewandte Stirnseite des Stützrings mit seiner dem Dichtring abgewandten Stirnseite. Dadurch wird ein Druckaufbau zwischen dem Dichtring und dem Stützring vermieden, ein Druck zwischen dem Dichtring und dem Stützring baut sich durch den Längsdurchlass ab. Ein Druck zwischen dem Dichtring und dem Stützring kann sich als sog. Schleppdruck bei einer Schleppleckage zwischen Dichtring und Zylinder bei der Hubbewegung des Kolbens im Zylinder einstellen. Ein Druckaufbau zwischen dem Dichtring und dem Stützring würde den Dichtring vom Stützring weg verschieben und wird wie bereits erläutert durch den mindestens einen Längsdurchlass des Stützrings vermieden. Üblicherweise sind der Dichtring und der Stützring auf dem Kolben angeordnet, bewegen sich also mit dem Kolben mit. Denkbar ist auch der umgekehrte Fall, dass der Dichtring und der Stützring im Zylinder angeordnet sind und mit diesem stillstehen.

Vorteil der Erfindung ist die Möglichkeit einer verhältnismäßig großflächigen axialen Abstützung des Dichtrings vom Stützring auf einer Kreisringfläche mit einem Außendurchmesser, der einem Innendurchmesser des Zylinders, und mit einem Innendurchmesser, der einem Außendurchmesser des Kolbens, jeweils an der Stelle, an der sich der Dichtring und der Stützring befinden, entspricht. Ausgenommen von der stützenden Querschnittsfläche ist bzw. sind lediglich der Querschnitt des mindestens einen Längsdurchlass an seiner dem Dichtring zugewandten Mündung.

Die Unteransprüche haben vorteilhafte Ausgestaltungen und Weiterbildungen der im Anspruch 1 angegebenen Erfindung zum Gegenstand.

Die Ausbildung des Längsdurchlass als Längsnut an einem Außen- oder Innenumfang des Stützrings gemäß Anspruch 2 hat den Vorteil einer einfachen Herstellbarkeit des Stützrings im Vergleich mit beispielsweise einem als Längsdurchlass ebenfalls möglichen Durchgangsloch durch den Stützring.

Anspruch 3 sieht den erfindungsgemäßen Stützring an einem sog. Ausgleichskolben vor. Dieser wird wie Pumpenkolben mit einem Exzenter, insbesondere mit demselben Exzenter wie der oder die Pumpenkolben, angetrieben, er und sein Zylinder weist jedoch keine Fluidsteuerung, also insbesondere weder Ein- noch Auslassventile auf. Der Ausgleichskolben kommuniziert mit dem oder den Pumpenkolben der Kolbenpumpe und verringert deren Druckpulsation. Er kann mit seinem Zylinder als Hydrospeicher aufgefasst werden, dessen Volumen sich synchron mit der Hubbewegung des oder der Pumpenkolben ändert. Der Ausgleichskolben und sein Zylinder benötigen keinen getrennten Ein- und Auslass, es genügt ein Anschluss, wenngleich getrennte Ein- und Auslässe nicht ausgeschlossen sind.

Anspruch 4 sieht einen umlaufenden Wulst an einer Außen- und/oder Innenseite des Dichtrings vor, dessen Kuppe dichtend am Zylinder bzw. am Kolben anliegt. Mit "Kuppe" ist der "höchste" Teil des Wulsts gemeint, also der radial am weitesten außen bzw. am weitesten innen befindliche, umlaufende Teil des Wulsts, vorzugsweise ist der umlaufende Wulst gemäß Anspruch 5 an einem Dichtring mit einem im übrigen viereckigen Ringquerschnitt ausgebildet. Durch die viereckige Grundform des Ringquerschnitts lässt sich eine hohe Druckfestigkeit des Dichtrings erzielen, der Dichtring ist vergleichsweise massiv. Die Ausbildung des dichtenden Bereichs des Dichtrings als Wulst ermöglicht ebenfalls eine vergleichsweise massive Ausbildung und damit eine hohe Druckfestigkeit. Bei der Druckfestigkeit insbesondere des dichtenden Bereichs des Dichtrings geht es nicht ausschließlich darum, eine Zerstörung des Dichtrings zu vermeiden, sondern auch eine Verformung des dichtenden Bereichs bei einseitiger Druckbeaufschlagung so gering zu halten, dass die Dichtwirkung möglichst nicht beeinträchtigt wird. Ein weiterer Vorteil des erfindungsgemäß ausgebildeten Dichtrings ist dessen Druckaktivierung: bei einer Druckbeaufschlagung wird der Dichtring axial gestaucht und weitet sich radial nach außen und/oder innen, so dass sich eine Andruckkraft an den Zylinder und/oder den Kolben vergrößert. Damit wird eine gute Dichtwirkung sowohl bei niedrigem als auch bei hohem Druck erzielt, wobei die Andruckkraft bei niedrigem Druck niedrig sein kann, um Reibung und Verschleiß zu mindern.

Anspruch 6 sieht einen einseitig geschlossenen Zylinder vor. Das hat den Vorteil, dass das Zylinderende nicht mit einem separaten Bauteil verschlossen werden muss.

### Kurze Beschreibung der Zeichnung

Die Erfindung wird nachfolgend anhand einer in der Zeichnung dargestellten Ausführungsform näher erläutert. Es zeigen:
- Figur 1: einen Kolben und einen Zylinder gemäß der Erfindung in einer Achsschnittdarstellung;
- Figur 2: einen erfindungsgemäßen Stützring des Kolbens aus Figur 1 in perspektivischer Darstellung;
- Figur 3: einen erfindungsgemäßen Dichtring des Kolbens aus Figur 1 in einem perspektivischen Halbschnitt; und
- Figur 4: eine Schemadarstellung einer Kolbenpumpe gemäß der Erfindung.

### Ausführungsform der Erfindung

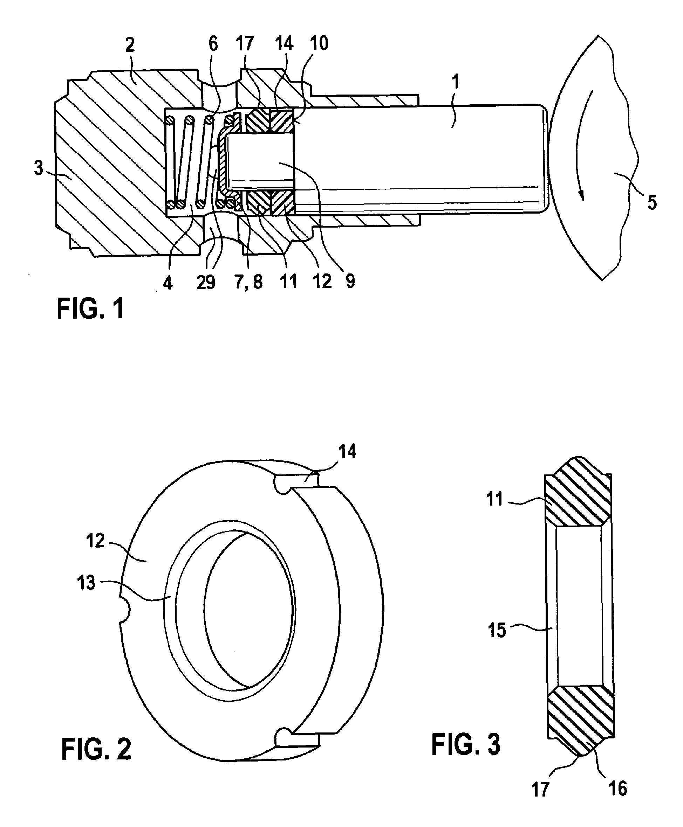

Der in Figur 1 dargestellte Kolben 1 ist axial verschiebbar in einem Zylinder 2 aufgenommen. An einem Ende steht der Kolben 1 aus dem Zylinder 2 vor, das andere Ende des Zylinders 2 ist geschlossen ausgebildet durch einen Boden 3, der einstückiger Bestandteil des Zylinders 2 ist. Der Kolben 1 schließt einen Speicherraum 4 zwischen sich und dem Boden 3 im Zylinder 2 ein.

Der Kolben 1 ist mit einem Exzenter 5, der mit einem nicht dargestellten Elektromotor drehend um eine exzentrische Drehachse antreibbar ist, zu einer im Zylinder 2 axial hin- und hergehenden Hubbewegung antreibbar. Bei der hin- und hergehenden Hubbewegung vergrößert und verkleinert der Kolben 1 abwechselnd ein Volumen des Speicherraums 4, so dass abwechselnd Fluid aufgenommen und abgegeben wird.

Im Speicherraum 4 ist eine Kolbenrückstellfeder 6 angeordnet, die sich am Boden 3 des Zylinders 2 abstützt und über einen Federhalter 7 in axialer Richtung gegen den Kolben 1 drückt und dessen aus dem Zylinder 2 vorstehendes Stirnende in Anlage an einem Umfang des Exzenters 5 hält. Der Federhalter 7 ist ein Tiefziehteil aus Blech, das flach napfförmig ist und einen breiten, flanschartigen Rand 8 aufweist, gegen den die Kolbenrückstellfeder 6 drückt. Der Federhalter 7 ist auf einen durchmesserverjüngten koaxialen Fortsatz 9 des Kolbens 1 aufgesetzt, der einstückiger Bestandteil des Kolbens 1 ist. Zwischen dem Rand 8 des Federhalters 7 und einer Ringschulter 10 des Kolbens 1 am Übergang zum Fortsatz 9 sind ein Dichtring 11 und ein Stützring 12 auf den Fortsatz 9 des Kolbens 1 aufgesetzt. Der Dichtring 11 ist auf einer dem Speicherraum 4 zugewandten Seite des Stützrings 12 angeordnet.

Der in Figur 2 dargestellte Stützring 12 hat einen quadratischen Ringquerschnitt mit Fasen 13 an einer Innenseite des Stützrings 12. Am Außenumfang weist der Stützring 12 drei Längsnuten 14 als Längsdurchlässe für Fluid auf. Der Stützring 12 liegt außen am Zylinder 2 und innen am Fortsatz 9 des Kolbens 1 an. Er besteht aus einem steifen Material, beispielsweise aus einem PTFE (Polytetrafluorethylen) oder einem Polyamid wie PA 6.6 und kann Kohle enthalten.

Der Dichtring 11 weist wie in Figur 3 zu sehen einen rechteckigen Ringquerschnitt ebenfalls mit Fasen 15 an der Innenseite und einem umlaufenden Wulst 16 am Außenumfang auf. Eine Kuppe 17 des Wulsts 16 liegt dichtend am Zylinder 2 an. Die Kuppe 17 ist der radial am weitesten außen befindliche Bereich des Wulsts 16, in der dargestellten Ausführungsform ist die Kuppe 17 gerundet. Die Kuppe 17 ist umlaufend wie der Wulst 16. Der Dichtring 11 besteht aus einem elastischen Material, beispielsweise einem Elastomer wie EPDM (Ethylen-Propylen-Dien-Kautschuk).

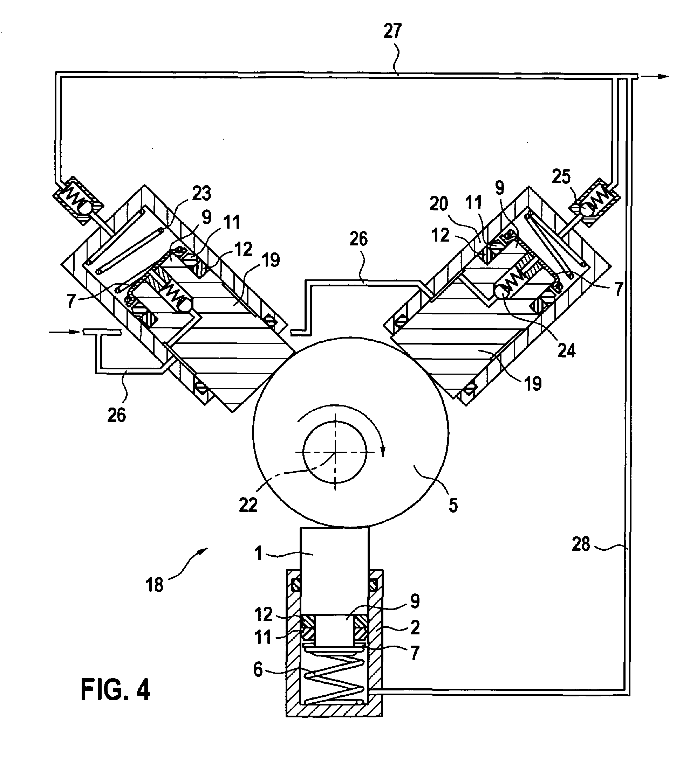

Figur 4 zeigt in schematisierter Form eine erfindungsgemäße Mehrkolbenpumpe 18, die den Kolben 1 und den Zylinder 2 aus Figur 1 aufweist. Die Mehrkolbenpumpe 18 ist für hydraulische Fahrzeugbremsanlagen vorgesehen, beispielsweise als Rückförderpumpe einer blockierschutz-, antriebsschlupf- und/oder fahrdynamik- bzw. schleuderschutzgeregelten Fahrzeugbremsanlage. Übliche Abkürzungen solcher Regelungen sind ABS, ASR, FDR und/oder ESP. Eine weitere Einsatzmöglichkeit der Mehrkolbenpumpe 18 sind elektrohydraulische Fahrzeugbremsanlagen (Abkürzung EHB). Bei letzteren handelt es sich um Fremdkraft-Bremsanlagen, bei denen der zum Bremsen erforderliche Betriebsbremsdruck mit einer Kolbenpumpe erzeugt wird, die Teil einer Fremdenergieversorgungseinrichtung ist. Die Mehrkolbenpumpe 18 ist für einen Bremskreis vorgesehen.

Die Mehrkolbenpumpe 18 weist drei Kolben 1, 19 auf, die sternförmig um den Exzenter 5 angeordnet sind, von dem ein Bruchstück auch in Figur 1 dargestellt ist. Die Kolben 1, 19 sind in Zylindern 2, 20 axial verschieblich aufgenommen, die in Pumpenbohrungen in einem nicht dargestellten Hydraulikblock eingesetzt sind. In dem Hydraulikblock sind außer den Zylindern 2, 20 weitere hydraulische Bauelemente wie Hydrospeicher und Magnetventile einer Schlupfregelung untergebracht und durch Bohrungen, die Bremsflüssigkeitsleitungen bilden, hydraulisch miteinander verschaltet. Der Hydraulikblock ist in der Zeichnung nicht dargestellt, er ist für derartige Schlupfregeleinrichtungen bekannt. Der Kolben 1 und der Zylinder 2 aus Figur 1 ist in Figur 4 unten schematisiert dargestellt.

Der Exzenter 5 ist mit einem in der Zeichnung nicht dargestellten Elektromotor rotierend um eine Drehachse 22 antreibbar, zu der der Exzenter 5 exzentrisch ist. Bei rotierendem Antrieb bewegt sich der Exzenter 5 auf einer Kreisbahn um die Drehachse 22. Die Drehachse 22 befindet sich in einem Schnittpunkt gedachter Längsachsen der Kolben 1, 19.

Auf dem Exzenter 5 abgewandten Stirnseiten der Kolben 1, 19 sind Kolbenrückstellfedern 6, 23 in den Zylindern 2, 20 angeordnet, die die Kolben 1, 19 in Anlage am Umfang des Exzenters 5 halten. Bei rotierendem Antrieb treibt der Exzenter 5 die Kolben 1, 19 zu hin- und hergehenden Hubbewegungen in den Zylindern 2, 20 an.

Die beiden in Figur 4 oben gezeichneten Kolben 19 weisen eine Fluidsteuerung auf, die ein Einlassventil 24 und ein Auslassventil 25 umfasst. Die Einlassventile 24 sind in die Kolben 19 integriert, was allerdings nicht zwingend ist. Die Ventile 24, 25 sind als Rückschlagventile ausgebildet, sie steuern die Durchströmungsrichtung von Bremsflüssigkeit. Bremsflüssigkeit strömt radial durch eine Querbohrung in die Kolben 19, anschließend durch eine Axialbohrung durch das in den Kolben 19 integrierte Einlassventil 24 in einen Pumpenraum im Zylinder 20. Aus dem Pumpenraum strömt die Bremsflüssigkeit durch das Auslassventil 25. Die Durchströmung und Förderung der Bremsflüssigkeit ist von Kolbenpumpen bekannt. Die beiden Pumpenkolben 19, die die Fluidsteuerung mit den Einlassventilen 24 und den Auslassventilen 25 aufweisen, werden nachfolgend als Pumpenkolben 19 bezeichnet. Ihre Einlässe 26 sind miteinander verbunden, ebenso ihre Auslässe, die einen gemeinsamen Auslass 27 der Mehrkolbenpumpe 18 bilden.

Beide Pumpenkolben 19 sind in einer V-Anordnung mit einem Winkelversatz von beispielsweise 90° angeordnet. Das ergibt eine Phasenverschiebung der Förderströme der beiden Pumpenkolben 19 von ebenfalls 90° und eine pulsierende Bremsflüssigkeitsströmung im Auslass 27.

Der dritte Kolben 1, der dem Kolben 1 aus Figur 1 entspricht, wird nachfolgend als Ausgleichskolben 1 bezeichnet, er weist keine Ventile und keine Fluidsteuerung auf. Er ist auf einer Winkelhalbierenden der beiden Pumpenkolben 19 und den beiden Pumpenkolben 19 in Bezug auf den Exzenter 5 gegenüber angeordnet, wodurch sich insgesamt die Sternanordnung der Kolben 1, 19 ergibt. Durch die Anordnung auf der Winkelhalbierenden den beiden Pumpenkolben 19 gegenüber pumpt der Ausgleichskolben 1 gegenfasig zum gemeinsamen Förderstrom der beiden Pumpenkolben 19. Der Ausgleichskolben 1 weist lediglich einen Anschluss 28 auf, der mit dem Auslass 27 verbunden ist, d.h. der Ausgleichskolben 1 kommuniziert mit den beiden Pumpenkolben 19. Der Anschluss 28 ist durch einander kreuzende Radialbohrungen 29 im Zylinder 2 des Ausgleichskolbens 1 geführt (vgl. Figur 1). Bei seiner Hubbewegung saugt der Ausgleichskolben 1 abwechselnd Bremsflüssigkeit aus dem Auslass 27 an und verdrängt anschließend das angesaugte Bremsflüssigkeitsvolumen wieder in den Auslass 27. Da der Ausgleichskolben 1 gegenfasig zu den beiden Pumpenkolben 19 angetrieben wird, saugt der Ausgleichskolben 1 Bremsflüssigkeit dann an, wenn der Förderstrom der Pumpenkolben 19 groß ist. Fördern die Pumpenkolben 19 bei ihrem Rückhub keine Bremsflüssigkeit, verdrängt der Ausgleichskolben 1 Bremsflüssigkeit, so dass die erfindungsgemäße Mehrkolbenpumpe 18 auch dann einen Förderstrom am Auslass 27 aufweist, wenn die beiden Pumpenkolben 19 beim Rückhub nicht fördern. Der Ausgleichskolben 1 senkt also den maximalen Förderstrom der Pumpenkolben 19 und erhöht bzw. bewirkt einen Förderstrom, wenn die beiden Pumpenkolben 19 wenig oder nicht fördern. Eine Druckpulsation der Mehrkolbenpumpe 18 ist verringert und in etwa gleich groß wie eine Druckpulsation einer vergleichbaren Mehrkolbenpumpe wäre, die vier Pumpenkolben mit Fluidsteuerung aufweist.

Bei gleichem Hub ist eine Kolbenfläche der Pumpenkolben 19 um den Faktor √2 größer als eine Kolbenfläche des Ausgleichskolbens 1. Der gleiche Hub ergibt sich durch den Antrieb aller Kolben 1,19 mit dem gemeinsamen Exzenter 5.

Die Längsnuten 14 des Stützrings 12 vermeiden einen Druckaufbau zwischen dem Dichtring 11 und dem Stützring 12 infolge einer sog. Schleppleckage am Dichtring 11 vorbei bei einer Hubbewegung des Kolbens 1. Die Schleppleckage wird durch Bremsflüssigkeit bewirkt, die als Schmierfilm am Zylinder 2 haftet und beim Hub des Kolbens 1 in Richtung des Speicherraums 4 vom Dichtring 11 und vom Stützring 12 überfahren und von der ein kleiner Teil bei einem Rückhub in entgegengesetzter Richtung abgestriffen wird. Der umlaufende Wulst 16 mit der dichtend am Zylinder 2 anliegenden, umlaufenden Kuppe 17 führt zu einer guten Dichtwirkung. Der vergleichsweise massive umlaufende Wulst 16 bewirkt eine vergleichsweise große Stabilität des Dichtrings 11, der aus einem elastischen Material besteht, so dass der Dichtring 11 auch den hohen Drücken widersteht, die mit der Mehrkolbenpumpe 18 in einer hydraulischen Fahrzeugbremsanlage erzeugt werden.

Die Pumpenkolben 19 können wie der Ausgleichskolben 1 einen Fortsatz 2 aufweisen, auf denen ein Dichtring 11 und ein Stützring 12 angeordnet sind, wie es in Figuren 1 bis 3 dargestellt und oben anhand der genannten Figuren erläutert ist. Der von den Kolben 1, 19 in den Zylindern 2, 20 eingeschlossene Raum wird bei den Pumpenkolben 19 als Pumpenraum und beim Ausgleichskolben 1 als Speicherraum 4 bezeichnet.

## Patentansprüche

1. Kolbenpumpe für eine hydraulische, eine Schlupfregelung aufweisende Fahrzeugbremsanlage (18), mit einem Kolben (1), der axial in einem Zylinder (2) verschiebbar und zu einer axial im Zylinder (2) hin- und hergehenden Hubbewegung antreibbar ist, wobei ein Dichtring (11) den Kolben (1) im Zylinder (2) abdichtet und ein Stützring (12) auf einer einem Speicher- oder Pumpenraum (4) abgewandten Seite des Dichtrings (11) angeordnet ist und den Dichtring (11) axial auf der dem Speicher- oder Pumpenraum (4) abgewandten Seite stützt, **dadurch gekennzeichnet, dass** der Stützring (12) mindestens einen Längsdurchlass (14) für Fluid aufweist.

2. Kolbenpumpe nach Anspruch 1, **dadurch gekennzeichnet, dass** der Stützring (12) mindestens eine Längsnut (14) als Längsdurchlass aufweist.

3. Kolbenpumpe nach Anspruch 1, **dadurch gekennzeichnet, dass** der Kolben (1) ein Ausgleichskolben zur Verringerung einer Druckpulsation der Kolbenpumpe (18) ist, der mit mindestens einem Pumpenkolben (19) der Kolbenpumpe (18) kommuniziert, und dass der Kolben (1) und der Zylinder (2) keine Fluidsteuerung aufweisen.

4. Kolbenpumpe nach Anspruch 1, **dadurch gekennzeichnet, dass** der Dichtring (11) einen umlaufenden Wulst (16) an seiner Außen- und/oder Innenseite aufweist, dessen Kuppe (17) dichtend am Zylinder (2) bzw. am Kolben (1) anliegt.

5. Kolbenpumpe nach Anspruch 4, **dadurch gekennzeichnet, dass** der Dichtring (11) einen viereckigen Ringquerschnitt mit dem umlaufenden Wulst (16) an der Außen- und/oder der Innenseite aufweist.

6. Kolbenpumpe nach Anspruch 1, **dadurch gekennzeichnet, dass** der Zylinder (2) ein geschlossenes Ende aufweist.

## Claims

1. Piston pump for a hydraulic vehicle brake system (18) having a slip control system, comprising a piston (1), which can be moved axially in a cylinder (2) and can be driven so as to perform an axially reciprocating stroke motion in the cylinder (2), wherein a sealing ring (11) seals off the piston (1) in the cylinder (2), and a support ring (12) is arranged on a side of the sealing ring (11) facing away from the accumulator or pump chamber (4) and supports the sealing ring (11) axially on the side facing away from the accumulator or pump chamber (4), **characterized in that** the support ring (12) has at least one longitudinal passage (14) for fluid.

2. Piston pump according to Claim 1, **characterized in that** the support ring (12) has at least one longitudinal groove (14) as a longitudinal passage.

3. Piston pump according to Claim 1, **characterized in that** the piston (1) is a compensating piston for reducing a pressure pulsation of the piston pump (18), said piston communicating with at least one pump piston (19) of the piston pump (18), and **in that** the piston (1) and the cylinder (2) do not have any fluid control.

4. Piston pump according to Claim 1, **characterized in that** the sealing ring (11) has an encircling bead (16) on the outside and/or the inside thereof, the crest (17) of which rests in a sealing manner on the cylinder (2) and/or the piston (1).

5. Piston pump according to Claim 4, **characterized in that** the sealing ring (11) has a quadrilateral ring cross section with the encircling bead (16) on the outside and/or the inside.

6. Piston pump according to Claim 1, **characterized in that** the cylinder (2) has a closed end.

## Revendications

1. Pompe à piston pour une installation hydraulique de freinage de véhicule (18) présentant une régulation du glissement, comprenant un piston (1) qui peut être déplacé axialement dans un cylindre (2) et qui peut être entraîné en un mouvement de course en va-et-vient axialement dans le cylindre (2), une bague d'étanchéité (11) réalisant l'étanchéité du piston (1) dans le cylindre (2) et une bague de support (12) étant disposée sur un côté de la bague d'étanchéité (11) opposé à un espace d'accumulation ou de pompe (4) et supportant la bague d'étanchéité (11) axialement sur le côté opposé à l'espace d'accumulation ou de pompe (4), **caractérisée en ce que** la bague de support (12) présente au moins un passage longitudinal (14) pour du fluide.

2. Pompe à piston selon la revendication 1, **caractérisée en ce que** la bague de support (12) présente au moins une rainure longitudinale (14) en tant que passage longitudinal.

3. Pompe à piston selon la revendication 1, **caractérisée en ce que** le piston (1) est un piston d'équilibrage pour réduire une pulsation de pression de la pompe à piston (18), qui communique avec au moins un piston de pompe (19) de la pompe à piston (18), et **en ce que** le piston (1) et le cylindre (2) ne présentent pas de commande de fluide.

4. Pompe à piston selon la revendication 1, **caractérisée en ce que** la bague d'étanchéité (11) présente un bourrelet périphérique (16) sur son côté extérieur et/ou intérieur, dont le sommet (17) s'applique de manière hermétique contre le cylindre (2) ou le piston (1).

5. Pompe à piston selon la revendication 4, **caractérisée en ce que** la bague d'étanchéité (11) présente une section transversale de bague quadrilatérale avec le bourrelet périphérique (16) sur le côté extérieur et/ou intérieur.

6. Pompe à piston selon la revendication 1, **caractérisée en ce que** le cylindre (2) présente une extrémité fermée.
